# EUROPEAN PATENT APPLICATION

(11) **EP 4 425 229 A1**
(43) Date of publication of application: **04.09.2024**
(21) Application number: 23159949.9
(22) Date of filing: 03.03.2023
(51) Int. Cl.: G02B 6/38, G02B 6/52

(54) **OPTIC ARRANGEMENT AND FIBER OPTIC CABLE ASSEMBLY**

(71) Applicant: Nestor Cables Oy, 90620 Oulu (FI)
(72) Inventor: Eklund, Aki, 90620 Oulu (FI)
(74) Representative: Kolster Oy Ab

(57) **Abstract**

According to a first aspect of the invention there is provided an optic arrangement comprising a ferrule configured to be coupled to a fibre of an optic cable, a spring having a first and a second end, and means for attaching the ferrule to the first end of the spring. According to a second aspect of the invention there is provided a fibre optic cable assembly comprising the optic arrangement,

## Description

### Field

The invention relates to a field of fibre optic cable assemblies.

### Background

There is a plurality of different type of fibre optic cable assemblies available in the market. Still, the known solutions have some drawbacks, especially from a field installation point of view. Components of the know solutions may be bulky making the field installation process challenging, especially when using a duct installation.

The aim of the invention is to alleviate the drawbacks of the known fibre optic cable assemblies.

### Brief description

The present invention is defined by the subject matter of the independent claims.

Embodiments are defined in the dependent claims.
The embodiments and features, if any, described in this specification that do not fall under the scope of the independent claim are to be interpreted as examples useful for understanding various embodiments of the invention.

### List of drawings

Example embodiments of the present invention are described below, by way of example only, with reference to the accompanying drawings, in which
Figures 1A, 1B, 1C and 1D illustrate an optic arrangement according to some embodiments of the invention; and
Figures 2A and 2B illustrates the optic arrangement and a fibre optic cable assembly according to some embodiments of the invention.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

A duct installation (known also as a pipe installation) is widely used with fibre optic cables when building new fibre optic infrastructures. The fibre optic cables may be inserted inside the duct by blowing, pushing, or pulling. Duct bundles is one example of the duct installation. It may comprise a common sheath and a plurality of ducts arranged inside the sheath. The fibres are inserted inside the duct. One duct may comprise a plurality of fibres. The ducts inside the sheath may have an inner diameter of 2,5 - 12mm, for example. Thus, the inner space to which the fibres are inserted is very limited causing many challenges to the installation. Optic connectors are used with the fibre optics for connecting the fibres together. A size of the connectors is very problematic when inserting the fibres inside the duct which inner diameter is small. Dimensions of the connector may limit or even prevent the installation of the fibres inside the duct. Therefore, the fibres may be delivered from a factory without the connectors. The connector may be connected (already in the factory) to a short piece of the fibre (pig tail), and this fibre is connected in the field to the fibre, which is inside the duct by splicing, for example. The splicing process in the field is complicated and time-consuming process. Another common method is to use semifinished connectors in the fibres. This means that housing of the connector, which is the largest component of the connector, may not be assembled in the factory, only components which are inside the housing. The housing may be assembled on the field. Anyway, structures of the known components inside the housing are not optimal from duct installation point of view. The invention is aimed to alleviate the above-mentioned issues.

According to a first aspect of the invention there is provided an optic arrangement comprising a ferrule configured to be coupled to an optic cable, a spring having a first and a second end, and means for attaching the ferrule to the first end of the spring.

The optic arrangement, in the content of this application, refers to the assembly of the components of the optic connector that are assembled to the fibre optic cable already in the factory. The optic arrangement is a semi-finished product (connector) that may be delivered without the housing due to the above-mentioned reasons. It is essential to protect the above-mentioned arrangement, as described in claim 1, since it may be a sales item. The fibre optic cable may also comprise only the ferrule attached with the spring by the attaching means instead of the full connector assembly when delivered to the field. As described above, the final assembly of the connector may be performed in the field after the fibre duct installation.

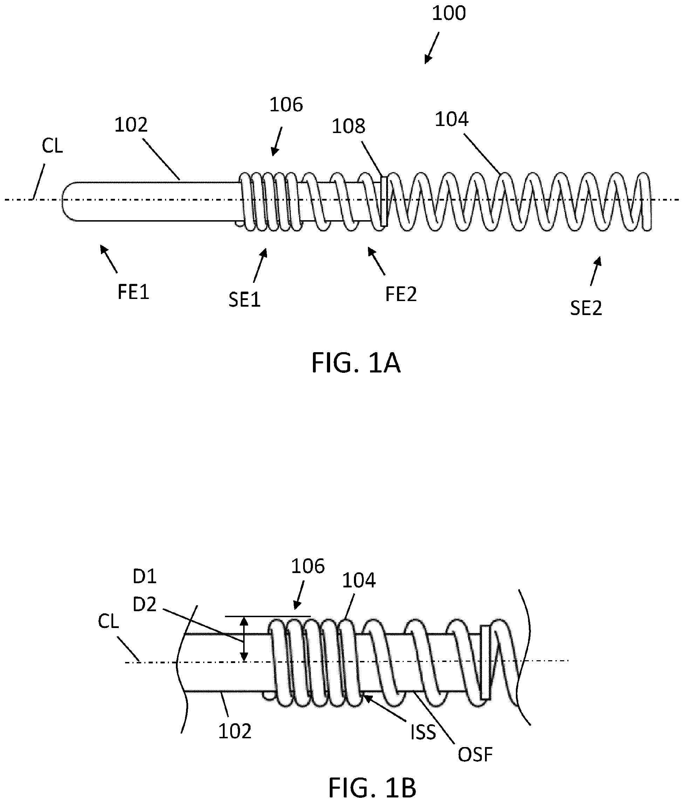

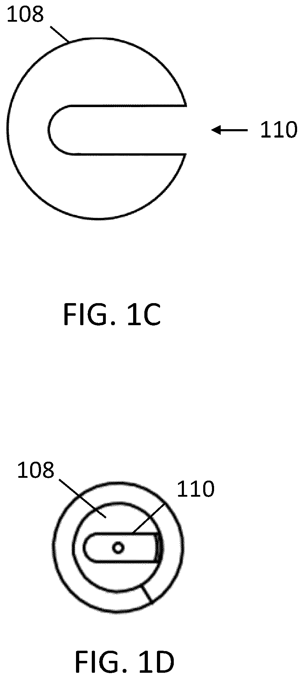

Referring now to Figure 1A and 1B, the optic arrangement 100 comprises one or more ferrules 102. The ferrule has a cylindrical shape, and its cross section (in a longitudinal direction L) may be substantially round (circular). The ferrule comprises a hole for receiving the fibre. The hole may be at second end of the ferrule FE2 such that ferrule has, at least partly, hollow structure. Another end FE1 (first end) may be solid, and it may be polished, for example. The ferrule may be made of ceramic, for example.

The optic arrangement 100 further comprises one or more springs 104. The spring may have elongated body having the first and the second ends SE1, SE2. An outer shape of the spring may be substantially cylindrical. The spring is configured to collapse (compress) when force is applied to it, and to return its original form (shape) when force is not applied anymore. The first end SE1 of the spring 104 may be attached to the ferrule 102 by the attaching means 106. The spring may be made of metal, for example.

The first and the second end of the spring/ferrule shall be understood broadly in this content. It may refer to one half of the spring/ferrule when divided to two pieces from the middle in the longitudinal direction (CL in Figure 1A), for example.

In an embodiment, the attaching means 106 are configured to prevent movement of the ferrule 102 in relation to the first end SE1 of the spring 104. In other words, the first end of the spring is permanently attached into the ferrule. Permanently refers to the attachment that keeps the parts together but may also be openable. Hence, the first end of the spring may be in a direct contact with the ferrule and/or via attaching means. Conventionally different kind of sleeves, commonly named as flanges are used when coupling the ferrule and the spring together. The flange is an additional (extra) component which enlarges the diameter of the arrangement, it may also cause extra cost. With the arrangement according to the invention, this may be avoided since the ferrule is attached directly with the spring by the attaching means. This also makes the diameter of the arrangement smaller improving the duct installation of the fibre optic cable assembly. The invention is also simpler and comprises fewer parts compared to the known solution.

Still referring to Figure 1A and 1B, in an embodiment, the ferrule 102 is configured to move in relation to the second end SE2 of the spring 104. In other words, the second end SE2 of the spring 104 is not attached to the ferrule. So, when force is applied to the ferrule such that the spring compresses, the first end is substantially stationary in relation to the ferrule, and the ferrule is configured to move in relation to the second end of the spring.

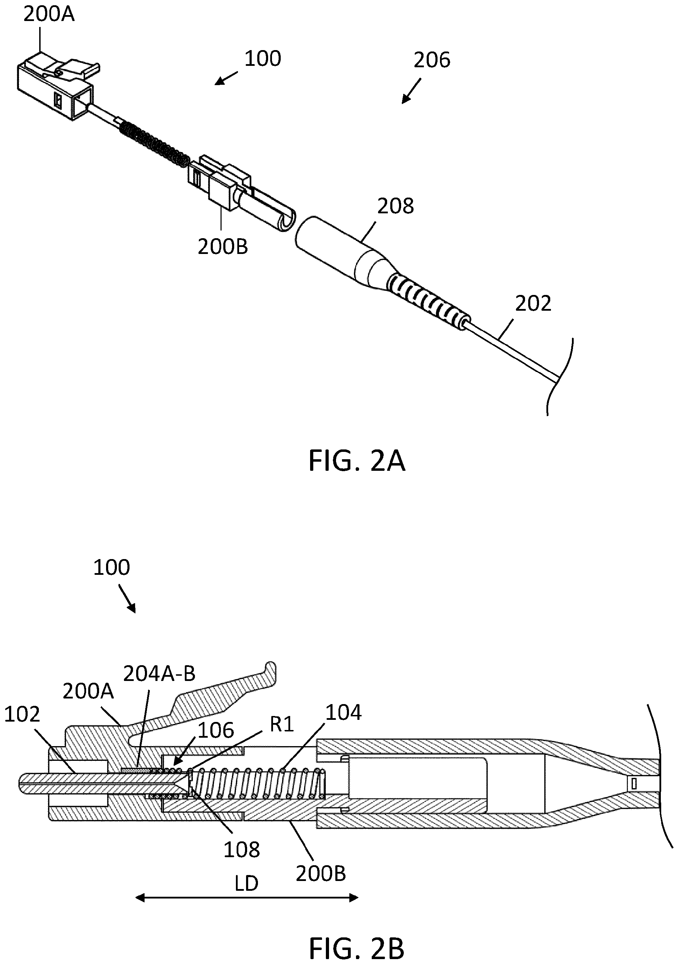

In an embodiment, the ferrule 102 is arranged, at least partly, inside the spring 104 at least in the vicinity of the first end SE1 of the spring as illustrated in Figure 2. The spring may be a hollow kind of structure (pipe kind of structure) wherein the ferule is arranged, at least partly, into the hollow space (inner space). The hollow space inside the spring is dimensioned such that its diameter is the same or slightly larger than the diameter of the ferrule allowing to set the ferrule inside the spring. The ferrule may move in the longitudinal direction LD of the ferrule and spring.

In an embodiment, the attaching means 106 are arranged, at least partly, between an inner surface ISS of the spring 104 and an outer surface OSF of the ferrule 102. As described above, the ferrule may be at least partly inside the spring and the attaching means are placed between the ferrule and the spring covering at least a part of the overlapped section. The overlapped section refers to a part of the ferrule which is inside the spring. The attaching means may be placed in one or more points between the ferrule and the spring. In other words, there may be one or more attaching points between the ferrule and the spring. As described above, the cross section of the ferrule may be circular, and the attaching means may cover the whole circular outer surface or just part of it from one or more points.

Referring now to Figure 1B, in an embodiment, a distance D1 from a centre line CL of the ferrule 102 to a top of the attaching means 106 is substantially the same or less than a distance D2 from the centre line CL of the ferrule 102 to an outer surface of the spring 104. This means that the maximum diameter of the attaching means is substantially the same or less than the maximum diameter of the spring. The outer surface of the spring may refer to the outermost surface of the spring defining the maximum diameter of the spring. The top of the attaching means may refer to the outermost surface of the attaching means defining the maximum diameter of the attaching means. Substantially the same shall be understood broadly in this content. The distance D1 from the centreline to the top of the attaching means may be also slightly larger (at least some millimetres) than the distance D2 from the centreline to the outer surface of the spring. Anyway, the main point is that the attaching means does not enlarge unnecessarily the maximum diameter of the arrangement. Then the maximum diameter of the arrangement is substantially the same as the maximum diameter of the spring enabling the smallest diameter for the arrangement as possible. This feature is very essential from the invention point of view because it makes possible to maximize the number of the cables that can be inserted inside the one duct in the field installation.

In an embodiment, the spring comprises a coil spring. The coil spring is made of a long piece of metal wire that is wound around itself. The coil spring may be compression spring configured to resist when compressed. Dimensions of the coil spring may vary according to the needs. The dimensions of the spring may affect how much the spring resists the compression.

In an embodiment, the attaching means comprises an adhesive. The adhesive (or glue) is a substance that is configured to (chemically) bind two or more components together and resist their separation. Hence, the first end of the spring may be glued to the ferrule such that the maximum diameter of an area in which the glue is placed is substantially the same or less than the maximum diameter of the spring. The glue may be dispensed substantially between the ferrule and the spring if the ferrule is inside the spring, for example. The adhesive/glue is very simple and effective solution for attaching the ferrule and the spring together.

In an embodiment, the ferrule may comprise an extension which, at least partly, attaches the ferrule and the spring together. The extension refers to a feature in which the diameter of the ferrule is substantially larger in some point of the ferrule. The spring may be set over the extension (extension is inside the spring) attaching the ferrule and the spring together. Hence, the extension may be the attaching means. The extension may also be arranged such that it is not inside the spring when the ferrule is coupled with the spring, it may be in the front of the spring limiting or preventing movement of the spring in relation of the ferrule in the longitudinal direction of the ferrule/spring (CL). For example, the extension may be in connection with the first end of the spring, and it may force the first end of the spring to move with the ferrule when the ferrule is pressed inside the housing. The spring may be then compressed between the extension and the housing. This is not illustrated in Figures.

Referring now to Figure 1A, in an embodiment, the arrangement further comprises holding means 108 coupled with the ferrule 102 and configured to receive the spring 102 and to relieve stress directed to the attaching means 106. The holding means are configured to reduce force that directed to the attachment means when the spring is compressed. This makes attachment of the ferrule and the spring more reliable and may extend its operating life. Referring now to Figure 2B, when the coil spring 104 is compressed, the holding means 108 is in contact at least with one round of the coiled wire R1. In other words, the holding means at least partly receive the spring and at least partly hold the ferrule and the spring together. So, the holding means are kind of auxiliary attaching means for attaching the ferrule and spring together and hence it decreases stress which is directed to the main attaching means like the adhesive. The holding means may be a separate component or it may be integral part of the ferrule.

In one embodiment, the holding means is a separate component comprising a plate kind of structure having substantially circular cross section as illustrated in Figures 1A and 1C. Figure 1A illustrates the holding means from a side view and Figure 1C is from a top or a bottom view. As can be seen, a thickness of the structure may remarkably smaller than its diameter. There may be a through hole in the structure leading through the fibre. The structure of the holding means may also be U-shaped or C-shaped, then there may be a slot instead of the hole in the structure as illustrated in Figure 1C. The U- or C-shape with the slot make possible to assemble the holding means to the arrangement from a side direction (perpendicular to the longitudinal direction LD). The holding means may be attached to the ferrule mechanically and/or chemically. For example, the holding means may be glued to the ferrule.

In a further embodiment, the holding means is an integral part of the ferrule and is a protrusion on the outer surface of the ferrule. The protrusion may be arranged in one end of the ferrule, which is interacting with the spring. In other words, at the end which may be inside the ferrule as illustrated in Figure 2B.

Referring now to Figure 2A and 2B, in an embodiment, the arrangement 100 further comprises a housing 200A - B wherein the ferrule 102 is arranged, at least partly, inside the housing 200A - B such that the ferrule 102 can move at least between a first and a second position in relation to the housing 200A - B, and the spring 104 is arranged inside the housing 200A - B such that the second end SE2 of the spring 104 is coupled with the housing 200A - B to prevent movement of the second end SE2 of the spring 104 in relation to the housing 200A - BA - B. Figure 2B is a cross section of the arrangement with the housing revealing components inside the housing. The housing may comprise a first part 200A and a second part 200B, wherein the second part may be, at least partly, inserted inside the first part. The ferrule 102 can move in its longitudinal direction LD in relation to the housing 200A - B. Figures 2A and 2B illustrates a situation in which the ferrule is in a first position. The first position refers to situation in which the optic arrangement (connector) is not connected with its counterpart (not illustrated in Figures). When the arrangement is coupled with the counterpart, the ferrule moves inside the housing (at least partly) in the longitudinal direction LD, and the spring is compressed. When the ferrule reaches its innermost position in relation to the housing, it is in the second position (the second position is not illustrated in Figures). As described, the housing is configured to prevent the movement of the second end of the spring in relation to the housing, and the first end of the spring is attached to the ferrule. Hence, when the ferrule moves from the first position towards the second position, the spring compresses and tries to return the ferrule to the first position. In other words, the spring is configured to compress when force is applied to the ferrule for moving the ferrule from the first position towards the second position, and the spring is further configured to return the ferrule to the first position when force is not applied. Spring force provided by the spring ensures the proper contact between the ferrule and its counterpart when connected.

In an embodiment, the arrangement further comprises a guiding means arranged on the ferrule and/or the spring configured to guide the ferrule to a predetermined position in relation to the housing. The housing may also comprise a counterpart for the guiding means configured to receive the guiding means. Referring now to Figure 2B, guiding means 204A may be arranged in the ferrule 102 and/or the spring 104, and the housing 200A - B may comprise the counterpart 204B for the guiding means. The guiding means may be a projection and the counterpart may be an opening (slot) configures to receive the projection. The projection may enter the opening only when the ferrule is in the predetermined position in relation to the housing. This ensures the right positioning of the ferrule in relation to its counterpart. In one embodiment, the projection may be a separate component coupled with the ferrule or the spring. In other embodiment, the projection may be an integral part of the ferrule and/or the spring.

In an embodiment, a distance from the centre line of the ferrule to top of the guiding means is substantially the same or less than the distance from the centre line to top of the spring. In other words, the guiding means does not increase the diameter of the arrangement when the housing is not assembled making the field installation easier as described earlier in this application. As illustrated in Figure 2B, a height of the guiding means is substantially the same as the height of the spring. The height refers to a direction which is perpendicular in relation to the longitudinal direction LD illustrated in Figure 2B.

Referring now to Figure 2A, according to a second aspect of the invention there is provided a fibre optic cable assembly 206 comprising the optic arrangement 100. The optic arrangement may comprise one or more features described above. The fibre optic cable assembly comprises at least one fibre optic cable 202 and at least one optic arrangement 100. It may further comprise a boot 208, for example. As described above, the product which is delivered from the factory may comprise the optic arrangement 100 coupled with the fibre optic cable (forming the fibre optic cable assembly). In other words, the optic arrangement 100 is coupled at least in one end of the fibre optic cable 202. The housing 200A - B may not be assembled to the arrangement in the factory, but it may be a part of the delivery. The housing may be assembled on the field after the fibre optic cable assembly is installed in the duct.

The solution of the invention alleviates the main issue of the duct installation. The invention provides the optic arrangement having remarkably smaller diameter than in the known solution. This makes possible to install higher number of the ferrule terminated fibre optics into the one duct which increases capacity of the fibre installation and further improves efficiency of the installation.

It will be obvious to a person skilled in the art that, as technology advances, the inventive concept can be implemented in various ways. The invention and its embodiments are not limited to the example embodiments described above but may vary within the scope of the claims.

## Claims

1. An optic arrangement comprising:
a ferrule configured to be coupled to a fibre of an optic cable;
a spring having a first and a second end; and
means for attaching the ferrule to the first end of the spring.

2. The optic arrangement of claim 1, wherein the attaching means are configured to prevent movement of the ferrule in relation to the first end of the spring.

3. The optic arrangement of claim 2, wherein the ferrule is configured to move in relation to the second end of the spring.

4. The optic arrangement of any preceding claims, wherein the ferrule is arranged, at least partly, inside the spring at least in the vicinity of the first end.

5. The optic arrangement of claim 4, wherein the ferrule is configured to move inside the spring.

6. The optic arrangement of claim 4, wherein the attaching means are arranged, at least partly, between an inner surface of the spring and an outer surface of the ferrule.

7. The optic arrangement of any preceding claims, wherein a distance from a centre line of the ferrule to a top of the attaching means is substantially the same or less than a distance from the centre line of the ferrule to an outer surface of the spring.

8. The optic arrangement of any preceding claims, wherein the spring comprises a coil spring.

9. The optic arrangement of any preceding claims, wherein the attaching means comprises an adhesive.

10. The optic connector of any preceding claims, wherein the arrangement further comprises holding means coupled with the ferrule and configured to receive the spring such that the holding means receive at least a part of stress directed to the attaching means.

11. The optic arrangement of any preceding claims, wherein the arrangement further comprises a housing wherein,
the ferrule is arranged, at least partly, inside the housing such that the ferrule can move at least between a first and a second position in relation to the housing,
and the spring is arranged inside the housing such that the second end of the spring is coupled with the housing to prevent movement of the second end of the spring in relation to the housing.

12. The optic arrangement of claim 11, wherein the spring is configured to compress when force is applied to the ferrule for moving the ferrule from the first position towards the second position, and the spring is further configured to return the ferrule to the first position when force is not applied.

13. The optic arrangement of claims 11 - 12, wherein the arrangement further comprises a guiding means arranged on the ferrule and/or the spring configured to guide the ferrule to a predetermined position in relation to the housing.

14. The optic arrangement of claim 13, wherein a distance from the centre line of the ferrule to top of the guiding means is substantially the same or smaller than the distance from the centre line to top of the spring. the guiding means is arranged in the ferrule and/or spring.

15. A fibre optic cable assembly comprising an optic arrangement of claims 1 - 14.
